# EUROPEAN PATENT SPECIFICATION

(11) **EP 0 966 582 B1**
(45) Date of publication and mention of the grant of the patent: **13.10.2004**
(21) Application number: 98907899.3
(22) Date of filing: 13.03.1998
(51) Int. Cl.: E04F 15/18, B32B 31/08

(54) **A SHEET FOR USE AS A FLOOR SUBSTRUCTURE**
BAHNFÖRMIGES MATERIAL VERWENDBAR ALS UNTERKONSTRUKTION FÜR EINEN BODEN
LAME UTILISABLE EN TANT QU'INFRASTRUCTURE DE PLANCHER

(30) Priority: 14.03.1997 DK 28797
(43) Date of publication of application: 29.12.1999
(73) Proprietor: Icopal A/S, 2730 Herlev (DK)
(72) Inventor: HARDER, Sven, DK-2625 Vallensb k (DK)
(74) Representative: Sundien, Thomas
(86) International application number: PCT/DK1998/000092
(87) International publication number: WO 1998/041710

(56) References cited:
- EP-A- 0 690 186
- WO-A-95/00730
- DE-A- 3 031 036
- DE-A- 3 308 207
- US-A- 4 225 374
- US-A- 5 502 931

## Description

### Background of the invention

### 1. Field of the invention

The present invention relates to a sheet for use as a floor substructure, and in particular to a barrier material adapted for use as a substructure for a non-anchored floor. The invention also relates to a laminate web for use in the manufacturing of a sheet of the above mentioned kind, to a method of manufacturing a sheet of this kind, and to a method of manufacturing a barrier layer for use as part of a floor substructure.

In the present context, the term a non-anchored floor is used to designate a floor where the proper floor covering for being tread on is installed on top of a generally planar sub floor without any points of attachment or anchorings as opposed to floor coverings installed on top of and nailed to floor joists etc. The covering of a non-anchored floor may for instance comprise a wooden covering such as a parquet flooring whilst the sub floor may consist of a slab of concrete.

The installation of a wooden floor covering directly on top of a concrete slab is associated with certain difficulties which must be dealt with in order to obtain a satisfactory result. The lack of resilience inherent to the concrete slab has the consequence that the floor may become uncomfortably hard to walk on unless some shock absorbing layer is interposed between the floor covering and the slab.

The lack of resilience may also cause the degree of noise transmission to be higher than acceptable. In addition, the concrete slab may give off moisture from the surface due to the curing proces or due to moisture coming from underlying strata which may lead to a miscolouring or a change of dimensions of the floor covering. The moisture may also produce an unpleasant cooling effect.

A growing concern about potentially dangerous gasses such as radon emerging from deep underground strata .has furthermore prompted a growing demand for solutions, whereby a substantially gas-impervious barrier layer could be incorporated as part of a housing substructure, in particular in case of houses without a ventilated space below the floor.

### 2. Description of the Prior Art

PCT/DK93/00248 (=EP 0705376=WO 95 00730A) contains a teaching of a sheet for use as a floor substructure which sheet generally consists of a fibrous layer in the form of cardboard treated on the lower side with a layer of bitumen which is treated on the respective lower side with a sound insulating layer comprising plastic spheres. The bitumen layer intercepts the rising moisture, thereby protecting the cardboard which degrades if exposed to moisture. Although this prior art material in many respects fulfils the requirements, it is, however, also associated with various drawbacks. The bitumen does not tolerate any significant heating, e.g. as may occur if the floor includes integrated heating elements. Spheres may separate from the sheet, creating difficulties to other procedures such as the assembly of tight-fit keys and grooves of parquet flooring elements.

Finally, an increased awareness about potential risks due to gasses given off by substances such as bitumen has precipitated a desire to find replacement materials containing no such substances.

From the marketplace (cf. for example EP 0690186A) an intermediate layer material is known which comprises a felt layer laminated with a polyethylene plastic foil. This material presents certain drawbacks. The foil is unprotected to one side and therefore susceptible to being damaged during handling or installation. If the material is installed turned with the foil facing downwards, irregularities, frequently present in a concrete floor, may perforate the plastic foil. The felt, if facing upwards, cannot be used for adhering anything on top, it cannot be used for the drawing of marking lines on top, and it is easily distorted and deformed by traffic on top.

On the other hand, if the material is installed turned with the foil facing upwards, the foil risks being perforated due to working procedures, by traffic or by engagements with irregularities protruding from the lower side of the floor covering. The perforations may arise during the construction phase or during use due to the movements of the floor when treading on it. The foil if facing upwards presents an unpleasant surface and provides an uncomfortable working surface for the craftsmen who must finish the floor, it is unsuitable for adhesion of the floor covering and unsuitable for the drawing of marking lines etc.

DE 30 31 036 discloses a heat insulating plate for carrying the pipes of an underfloor heating system. An upper heat insulating plate is offset with respect to a waterproof foil on a lower plate of foamed polystyrol.

### Summary of the invention

The invention, in a first aspect, provides a sheet with the features according to claim 1.

This sheet comprises a foil forming gas-impervious membrane useful for building a continuous, generally gasproof layer of intermediate layer material, capable of intercepting any rising gasses such as water moisture, radon etc. In the present context, the terms gas-impervious and gasproof are used to signify that the membranes or septums referred to, when subject to the conditions generally prevailing in a floor substructure, are capable of baffling permeation of gas to an extent where the migration of gasses such as water vapour is reduced by a noticeable extent, and preferably to a level where a wooden floor covering, installed on top will not be adversely affected by moisture permeating from below.

The foil is protected on both sides making it feasible to select for the foil a sheet of minimal thickness without compromising the security that the foil stays intact throughout all handling and installation procedures as well as through its service life. The porous layer may comprise a felt of polymer material, e.g. a felt of polyamide, acryl, polypropylene or polyester with no substantial content of moisture sensitive ingredients. Suitable materials are available at reasonable cost as scrap from the textile industry. The porous layer has a shock absorbing and sound insulating capability and allows some ventilation and pressure equalizing along the surface of the sub floor.

The fibrous layer may comprise a mix of fibres including cellulose fibres, e.g. from shredded cardboard which offers a durable and very comfortable surface and which possesses favourable qualities as regards shock absorption, sound insulation and thermal insulation etc. Suitable materials are available at reasonable cost as scrap from the cardboard industry.

The mix of fibres may also include a proportion of plastic fibres, which tend to soften the product in order that it is easier rolled and unrolled.

According to preferred embodiments, the fibrous layer or the porous layer is adhered onto the membrane by means of an adhesive bonding which covers partial surfaces interrupted by spaces without an adhesive bonding, so that the adhered area represents less than 20% and in particular less than 10% of the total area. The non adhered areas serve to make the product more flexible in order that is easily unrolled and laid down flat. This solves the problem of distortions etc. which may be a risk when combining thin layers of materials as different as cardboard and polymer.

In particular, the adhesive bonding may be carried out with a hot fusible adhesive applied in stripes. A bonding of this kind may be carried out by simple working routines and at minimal cost of material.

Similar lengths of web of intermediate layer material may be seamed together along the edges where the border zones of respective membranes are in overlying and surface bonded relationship, one on top of the other one. Thus, the seam presents double membranes but just a single top fibrous layer and a single bottom porous layer. Since the thickness of the membranes represents but a very small part of the total thickness of the sheets, the seam does not noticeably add to the thickness of the other portions of the sheet. The bonding of the membranes is conveniently implemented by means of a double faced adhesive tape applied on one foil border during an earlier stage or applied on the spot.

In a further aspect, the invention provides a method of manufacturing a sheet as indicated in claim 8.

This method, allowing the layers to be joined by means of hot fusible adhesives, may be carried out in a simple manner and at a minimal cost of materials. The intermediate step where the porous layer pressed together with the adhesive foil are cooled before being joined with the fibrous layer serves the purpose of minimizing the risk of overheating the membrane and of causing distortions in the finished product due to temperature related dimensional changes. The method according to the invention, makes it feasible to use a thin foil of e.g. polyethylene which is by virtue of the narrow gauge sensitive to overheating as might otherwise occur during a procedure involving fusion by a hotmelt adhesive. Once sandwiched and protected between the porous layer and the fibrous layer, the polyethylene foil will safely sustain temperatures as high as 180°C, far in excess of any temperature expected, once the sheet is installed as part of a floor structure.

In a still further aspect, the invention provides a method as recited in claim 11. By this method, it is possible to provide a gas-impervious barrier layer for use as part of a floor substructure capable of barring penetration of gasses into the dwelling along this route.

### Brief description of the drawings

The invention will be more fully understood from the appended description of preferred embodiments, explained with reference to the drawings where

Fig. 1 shows a section in a laminate web according to the invention

Fig. 2 shows a section of a floor with a barrier layer according to the invention, in an area, which includes a border seam between the two lengths of web, and

Fig. 3 is a schematic depiction of a production line for the manufacturing of a web, implementing a method according to the invention.

All drawings are schematic and simplified, only showing elements necessary for the sake of understanding the invention, while other elements have been excluded for the sake of clarity. The drawings are not necessarily to scale. The same references are used in all figures for designating identical or similar items.

### Description of the preferred embodiments

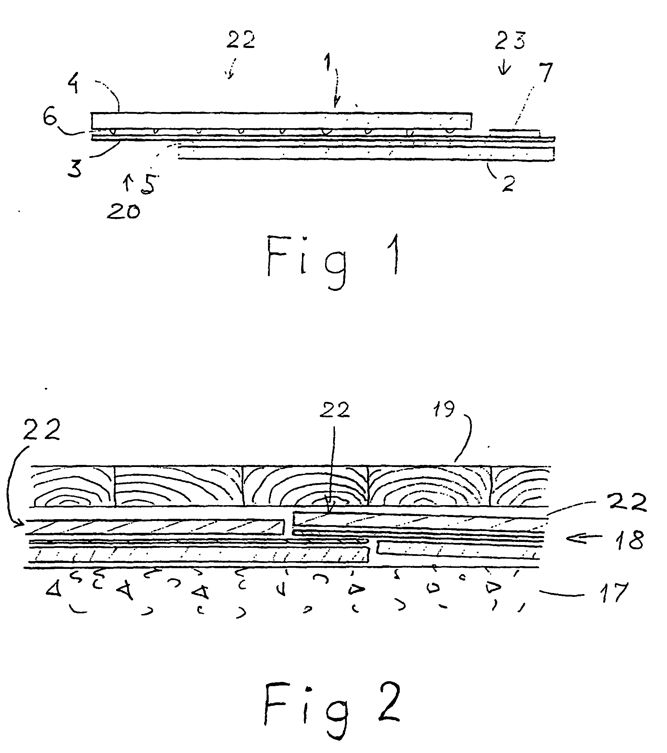

Reference is first made to Fig. 1 showing a section in a laminate web 22. The laminate web 22 comprises a laminate 1, generally composed of a felt layer 2, a foil 3 and a fibrous layer 4, mentioned in the order taken from the bottom. The felt layer is adhered to the foil by the felt bonding 5 and the fibrous layer is adhered to the foil by the fibrous bonding 6.

In the web, appropriate elements of this composition are so arranged that in the left side of Fig. 1, the porous layer is terminated short of the leftmost edge by a distance while in the right side of Fig. 1, the fibrous layer is terminated short of the rightmost edge by a distance. The left-hand border zone is designated by the reference 20, the right-hand border zone is designated by the reference 23. A double faced adhesive tape 7 with a peelable slip foil is applied to a face of the foil 3, situated along the right-hand border zone 23.

According to a preferred embodiment, the web 22 is manufactured to a width of 110 cm with border zones to a width of 10 cm each. The foil may comprise a polyethylene foil, e.g. of a thickness of 40 µm. The felt layer may comprise a polypropylene felt e.g. in a quantity from 80 - 200 g/m². The fibrous layer may comprise a mix of cellulose fibres and synthetic wool fibres, e.g. in a quantity from 100 - 400 g/m². The total thickness of the web lies between 1 and 4 mm.

Fig. 2 shows a section of a floor where lengths of the laminate web, according to the invention, has been used to build a barrier layer 18. This floor comprises a sub floor 17 made of a slab of concrete on top of which lengths of web 22 have been placed. The lengths of web are placed in juxtaposition and generally parallel and have been seamed along the edges where the border zones of the foils are in surface contact and adhered together by means of a double faced adhesive tape. On top of the barrier layer 18, the proper floor covering 19 has been applied, comprising e.g. a parquet flooring.

The intimate joining of the lengths of web creates a coherent gasproof layer 18 which protects the dwelling interior against gasses likely to emanate from the concrete slab or from any underlying strata, e.g. radon gasses or water moisture.

Figures 1 and 2 show, for the sake of clarity, thickness dimensions of the length intermediate layer material strongly exaggerated. In reality, the thickness dimensions of the materials are minute compared to the lateral dimensions. In particular, the foil is very thin. Therefore, it is possible to compile the seam joint in such a manner that the gasproof layer 18 obtains a substantially uniform thickness everywhere.

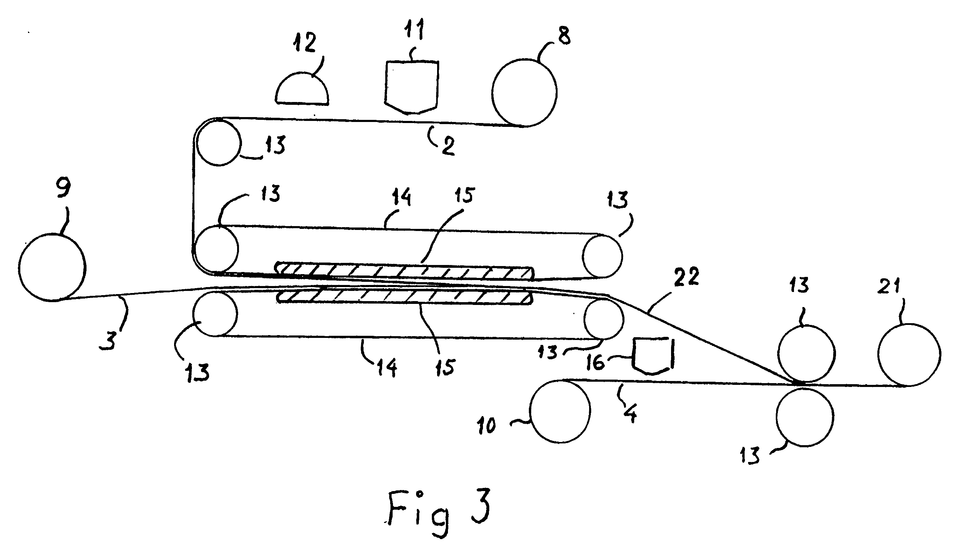

In a very schematised way, fig. 3 shows a production line for the manufacturing of a web by a method according to the invention. A web of felt is dispensed from the felt roll 8 and is conveyed past a powder dispenser 11 which dispenses hot fusible adhesive, e.g. on a polyethylene basis and in a quantity of e.g. 8 - 10 g/m².

The web of felt is conveyed past the heat unit 12 which may comprise a radiation heat unit which serves the purpose of heating the powder adhesive to make it tacky on contact. The web of felt is brought together with a web of foil from the foil roll 9 in a unit comprising two closed loop teflon belts 14 travelling about guide rollers 13 and between platens 15, in order that the belts may be forced to compress the two webs in surface to surface contact to form a two-layer laminate.

The platens 15 are equipped with cooling elements in order that they may cool the teflon bands and consequently also the two layered laminate substantially to room temperature before leaving the unit with the teflon bands. From the fibre roll 10, a fibre web is conveyed past a hotmelt dispenser 16 which applies narrow stripes of warm, tacky hotmelt on the fibre web. According to a preferred embodiment, adhesive is applied in stripes of each 5 mm, the distance between the stripes being approx. 10 cm. The applied quantity amounts to approx. 1 g/m of stripe or 10 g/m² within the stripe.

The fibre web with the warm tacky stripes of adhesive is brought together with the two layered laminate in face to face contact with the adhesive stripes facing the exposed face of the foil web between two cooperating guide rollers 13, whereby the layers are adhered. The double faced adhesive tape covered on one face with a peelable slip foil is applied to the foil border zone by means not shown in the figure and the final product is collected onto the product roll 21.

The modest amount of hotmelt dispensed on the fibre web does not cause any significant heating of the fibrous layer, thereby avoiding thermally related distortions in the final product. The only deformation to be corrected during the application is any residual bending remaining following unmangling of the product from the product roll 21. As this is a simple mangling, it is relatively easy to correct the form, e.g. by adhering a transverse stripe at each end of the unrolled web to the surface of the sub floor.

Although preferred embodiments of the invention have been explained in some detail above, this explanation is offered solely for the purpose of facilitating the understanding of the invention, and with no intention of limiting the scope of protection thereof which is defined exclusively by the appended claims.

## Claims

1. A sheet adapted for installation beneath a floor covering, said sheet having a first lateral edge and a second lateral edge opposite said first lateral edge and comprising a moisture tolerant, shock absorbing and porous layer (2), a substantially gas-impervious membrane (3) and a shock absorbing fibrous layer (4), said membrane (3) and said layers (2, 4) being bonded together in overlying relationship such that the membrane (3) is sandwiched between said layers, **characterised in**
- **that** the membrane (3) is formed by a foil extending from said first lateral edge to said second lateral edge, and in
- **that** the sheet has a first border zone (20) adjacent said first lateral edge, which is free of said porous layer (2) and a second border zone (23) adjacent said second lateral edge, which is free of said fibrous layer (4), in order that two similar lengths of said sheet may be seamed together along respective lateral edges such that the foils 3 in the border zones (20, 23) of the respective sheets are arranged in overlying and surface bonded relationship, in order to provide a coherent and substantially gas-impervious barrier layer, wherein said membrane (3) lies generally protected on both sides.

2. A sheet according to claim 1, **characterized by** said fibrous layer (4) comprising cellulose fibres.

3. A sheet according to claim 1, **characterized by** said fibrous layer (4) or said porous layer (2) being bonded to said membrane (3) by a surface bonding, which effectively covers only partial areas separated by spaces without effective bonding, the bonded partial areas constituting less than 20% and preferably less than 10% of the total area.

4. A sheet according claim 3, **characterized by** the bonding being affected by means of hot melt adhesive applied in stripes.

5. A sheet according to claim 1, **characterized by** said porous layer (2) comprising a felt of polymer material and by said layer being bonded to said membrane (3) by means of a hot melt adhesive, which has been applied onto said membrane (3) in powder form.

6. A sheet according to claim 5, **characterized by** a double-faced adhesive tape (7), applied onto the surface of said membrane (3) along at least one of said border zones (20, 23).

7. A sheet according to claim 1, **characterised in that** the membrane (3) is a plastic foil.

8. A method of manufacturing a dl. sheet according to any of claims 1-7, **characterized by** comprising the steps of
- selecting a web (2) of a moisture tolerant, shock absorbing and porous polymer material, a web (3) of a substantially gas-impervious membrane and a web (4) of a shock absorbing fibrous material,
- spreading onto one side of said web of porous polymer material a hot melt adhesive in powder state,
- activating said hot melt adhesive by heating it,
- pressing together in a first compression stage said web-of porous polymer material with said web of a substantially gas-impervious membrane,
- cooling off said webs while keeping them pressed together, in order to cure said adhesive and form a two-layered laminate web,
- treating said web of fibrous material with an activated, tacky, hot melt adhesive, said adhesive being applied in a pattern that covers partial areas and leaves intermediate, untreated partial areas, and
- bringing together said web of fibrous material with said two-layered laminate web, with said web of fibrous material in face contact with said web of a substantially gas-impervious membrane, and pressing them together in order to adhere.

9. The method according to claim 8, **characterized by** said step of cooling off being furthered by using for the compression in said first compression stage platens provided with cooling means.

10. The method according to claim 8, **characterized by** the further step of mangling for forming a product roll.

11. A method of manufacturing a shock absorbing, substantially gas-impervious barrier layer for use as part of a floor substructure, using sheets according to claim 1-7, **characterized by** comprising the steps of
- selecting lengths of a sheet manufactured according to the method of claim 8,
- installing said lengths of sheet on top of the floor substructure in juxtaposition, in generally parallel arrangement with overlapping respective border zones, and
- adhering together border zones of respective lengths of sheet in order to provide a substantially coherent, gas-impervious membrane.

## Patentansprüche

1. Ein bahnförmiges Material, das zum Einbau unterhalb eines Fussbodenbelags ausgelegt ist, wobei das bahnförmige Material eine erste Seitenkante und eine zweite Seitenkante gegenüber der ersten Seitenkante aufweist, und welches eine feuchtigkeitsfeste, stossdämpfende und poröse Schicht (2), eine im wesentlichen gasundurchlässige Membran (3) und eine stossdämpfende Faserschicht (4) umfasst, wobei die Membran (3) und die Schichten (2, 4) übereinandergelegt so verklebt sind, dass die Membran (3) sandwichartig zwischen den Schichten liegt, **dadurch gekennzeichnet,**
- **dass** die Membran (3) durch eine Folie gebildet wird, welche sich von der ersten Seitenkante bis zu der zweiten Seitenkante erstreckt, und dadurch
- **dass** das bahnförmige Material eine erste Randzone (20) benachbart zu der ersten Seitenkante, welche von der porösen Schicht (2) frei ist, und eine zweite Randzone (23) benachbart zu der zweiten Seitenkante, welche von der Faserschicht (4) frei ist, aufweist, so dass zwei ähnliche Stücke des bahnförmigen Materials entlang der entsprechenden Seitenkanten derart zusammengenäht werden können, dass die Folien 3 in den Randzonen (20, 23) der entsprechenden bahnförmigen Materialien übereinandergelegt und oberflächenverklebt angeordnet sind, um eine zusammenhängende und im wesentlichen gasundurchlässige Sperrschicht bereitzustellen, wobei die Membran (3) allgemein geschützt auf beiden Seiten vorliegt.

2. Ein bahnförmiges Material gemäss Anspruch 1, **dadurch gekennzeichnet, dass** die Faserschicht (4) Cellulosefasern umfasst.

3. Ein bahnförmiges Material gemäss Anspruch 1, **dadurch gekennzeichnet, dass** die Faserschicht (4) oder die poröse Schicht (2) über eine Oberflächenklebung auf die Membran (3) geklebt ist, welche effektiv nur Teilflächen bedeckt, die durch Zwischenräume ohne effektive Klebung getrennt sind, wobei die geklebten Teilflächen weniger als 20% und vorzugsweise weniger als 10% der Gesamtfläche ausmachen.

4. Ein bahnförmiges Material gemäss Anspruch 3, **dadurch gekennzeichnet, dass** die Klebung mittels eines Heissschmelzklebers bewirkt wird, der in Streifen aufgetragen wird.

5. Ein bahnförmiges Material gemäss Anspruch 1, **dadurch gekennzeichnet, dass** die poröse Schicht (2) einen Filz aus Polymermaterial umfasst und dass die Schicht mittels eines Heissschmelzklebers auf die Membran (3) geklebt wurde, welcher in Pulverform auf die Membran (3) aufgetragen wurde.

6. Ein bahnförmiges Material gemäss Anspruch 5, **gekennzeichnet durch** ein zweiseitiges Klebeband (7), das auf die Oberfläche der Membran (3) entlang wenigstens einer der Randzonen (20, 23) aufgebracht wurde.

7. Ein bahnförmiges Material gemäss Anspruch 1, **dadurch gekennzeichnet, dass** die Membran (3) eine Kunststofffolie ist.

8. Ein Verfahren zur Herstellung eines bahnförmigen Materials gemäss irgendeinem der Ansprüche 1-7, **dadurch gekennzeichnet, dass** es die folgenden Schritte umfasst:
- Auswählen eines Gewebes (2) aus einem feuchtigkeitsfesten, stossdämpfenden und porösen Polymermaterial, eines Gewebes (3) aus einer im wesentlichen gasundurchlässigen Membran und eines Gewebes (4) aus einem stossdämpfenden Fasermaterial,
- Verteilen auf einer Seite des Gewebes des porösen Polymermaterials eines Heissschmelzklebers in pulverförmigem Zustand,
- Aktivieren des Heissschmelzklebers, indem dieser erwärmt wird,
- Zusammenpressen in einer ersten Kompressionsstufe des Gewebes des porösen Polymermaterials mit dem Gewebe einer im wesentlichen gasundurchlässigen Membran,
- Abkühlen der Gewebe, während diese weiterhin zusammengepresst werden, um den Kleber zu härten und ein zweischichtiges Laminatgewebe zu bilden,
- Behandeln des Gewebes des Fasermaterials mit einem aktivierten, klebrigen Heissschmelzkleber, wobei der Kleber in einem Muster aufgetragen wird, welches Teilflächen bedeckt und dazwischen liegende, unbehandelte Teilflächen freilässt, und
- Zusammenbringen des Gewebes des Fasermaterials mit dem zweischichtigen Laminatgewebe, wobei das Gewebe des Fasermaterials mit dem Gewebe einer im wesentlichen gasundurchlässigen Membran Flächenkontakt hat, und Zusammenpressen derselben, damit diese kleben.

9. Das Verfahren gemäss Anspruch 8, **dadurch gekennzeichnet, dass** der Schritt des Abkühlens dadurch unterstützt wird, dass zur Kompression in der ersten Kompressionsstufe Platten, welche mit einem Kühlmittel versehen sind, verwendet werden.

10. Das Verfahren gemäss Anspruch 8, **gekennzeichnet durch** den weiteren Schritt des Mangelns, um eine Produktrolle zu bilden.

11. Ein Verfahren zur Herstellung einer stossdämpfenden, im wesentlichen gasundurchlässigen Sperrschicht zur Verwendung als Teil einer Unterkonstruktion für einen Boden, welches bahnförmige Materialien gemäss den Ansprüchen 1-7 verwendet, **dadurch gekennzeichnet**, das es die folgenden Schritte umfasst:
- Auswählen von Stücken eines bahnförmigen Materials, das gemäss dem Verfahren von Anspruch 8 hergestellt wurde,
- Einbauen der Stücke des bahnförmigen Materials oben auf der Unterkonstruktion des Bodens in Nebeneinanderstellung, in allgemein paralleler Anordnung mit überlappenden entsprechenden Randzonen, und
- Zusammenkleben der Randzonen der entsprechenden Stücke des bahnförmigen Materials, um eine im wesentlichen zusammenhängende, gasundurchlässige Membran bereitzustellen.

## Revendications

1. Feuille destinée à être installée sous un revêtement de sol, ladite feuille présentant un premier bord latéral et un deuxième bord latéral qui est opposé audit premier bord latéral et qui comprend une couche poreuse (2) qui tolère l'humidité et absorbe les chocs, une membrane (3) essentiellement imperméable au gaz et une couche fibreuse (4) qui absorbe les chocs, ladite membrane (3) et lesdites couches (2,4) étant reliées ensemble en se superposant de telle sorte que la membrane (3) est prise en sandwich entre lesdites couches, **caractérisée en ce que**
la membrane (3) est formée par un film qui s'étend dudit premier bord latéral audit deuxième bord latéral et
**en ce que** la feuille présente une première zone de bord (20) qui est adjacente audit premier bord latéral et qui ne présente pas ladite couche poreuse (2) et une deuxième zone de bord (23) qui est adjacente audit deuxième bord latéral et qui ne présente pas ladite couche fibreuse (4), de telle sorte que deux longueurs similaires de ladite feuille puissent être assemblées le long de leurs bords latéraux respectifs de telle sorte que les films (3) situés dans les zones de bord (20, 23) des feuilles respectives soient reliés à la surface en se superposant de façon à fournir une couche de barrière continue et essentiellement imperméable au gaz, ladite membrane (3) étant globalement protégée des deux côtés.

2. Feuille selon la revendication 1, **caractérisée en ce que** ladite couche fibreuse (4) comporte des fibres de cellulose.

3. Feuille selon la revendication 1, **caractérisée en ce que** ladite couche fibreuse (4) ou ladite couche poreuse (2) sont reliées à ladite membrane (3) par une liaison de surface qui ne couvre efficacement que des régions partielles séparées par des espaces sans liaison efficace, les régions partielles reliées constituant moins de 20 % et de préférence moins de 10 % de la surface totale.

4. Feuille selon la revendication 3, **caractérisée en ce que** la liaison est réalisée au moyen d'un adhésif thermofusible appliqué en lignes.

5. Feuille selon la revendication 1, **caractérisée en ce que** ladite couche poreuse (2) comprend un feutre en matériau polymère et **en ce que** ladite couche est reliée à ladite membrane (3) au moyen d'un adhésif thermofusible qui a été appliqué sur ladite membrane (3) sous la forme d'une poudre.

6. Feuille selon la revendication 5, **caractérisée en ce qu'**une bande adhésive (7) à double face est appliquée sur la surface de ladite membrane (3) au moins le long d'une desdites zones de bord (20, 23).

7. Feuille selon la revendication 1, **caractérisée en ce que** la membrane (3) est un film plastique.

8. Procédé de fabrication d'une feuille selon l'une quelconque des revendications 1 à 7, **caractérisé en ce qu'**il comprend les étapes qui consistent à:
sélectionner une toile (2) constituée d'un matériau polymère poreux qui tolère l'humidité et absorbe les chocs, une toile (3) d'une membrane essentiellement imperméable au gaz et une toile (4) d'un matériau fibreux qui absorbe les chocs,
répandre un adhésif thermofusible à l'état de poudre sur un côté de ladite toile de matériau polymère poreux,
activer ledit adhésif thermofusible en le chauffant,
presser ensemble ladite toile de matériau polymère poreux et ladite toile d'une membrane essentiellement imperméable au gaz dans une première phase de compression,
refroidir lesdites toiles tout en les maintenant pressées ensemble de façon à faire prendre ledit adhésif et former une toile laminée à double couche,
traiter ladite toile de matériau fibreux avec un adhésif thermofusible poisseux activé, ledit adhésif étant appliqué selon un motif qui couvre des régions partielles et laisse non traitées des régions partielles intermédiaires et
assembler ladite toile de matériau fibreux et ladite toile laminée à double couche, ladite toile de matériau fibreux étant en contact facial avec ladite toile d'une membrane essentiellement imperméable au gaz et les presser ensemble de façon à ce qu'elles adhèrent.

9. Procédé selon la revendication 8, **caractérisé en ce que** ladite étape de refroidissement est facilitée par l'utilisation de plaques munies de moyens de refroidissement pour la compression lors de ladite première phase de compression.

10. Procédé selon la revendication 8, **caractérisé en ce qu'**il comprend en outre une étape d'enroulement de façon à former un rouleau de produit.

11. Procédé de fabrication d'une couche de barrière qui absorbe les chocs et qui est essentiellement imperméable au gaz, destinée à être utilisée comme élément de sous-structure d'un sol en utilisant des feuilles selon les revendications 1 à 7, **caractérisé en ce qu'**il comprend les étapes qui consistent à :
sélectionner des longueurs d'une feuille fabriquée par la méthode selon la revendication 8,
disposer lesdites longueurs de feuille sur la sous-structure d'un sol de telle manière qu'elles soient juxtaposées en général selon un agencement parallèle et que leurs zones de bord respectives se superposent et
faire adhérer ensemble les zones de bord des longueurs respectives de toile de façon à obtenir une membrane essentiellement continue et imperméable au gaz.
